# FASCICULE DE BREVET EUROPEEN

(11) **EP 1 065 478 B1**
(45) Date de publication et mention de la délivrance du brevet: **18.08.2010**
(21) Numéro de dépôt: 00401667.1
(22) Date de dépôt: 13.06.2000
(51) Int. Cl.: G01F 23/26

(54) **Sonde capactive de mesure du niveau d'un liquide conducteur de l'électricité dans un récipient et procédéde de fabrication d'une telle sonde.**
Kapacitiver Detektor zur Pegelmessung einer elektrisch leitenden Flüssigkeit in einem Behälter und Herstellungsverfahren eines solchen Detektors
Capacitive detector for measuring the level of an electric conductive liquid in a container and method for manufacturing such a detector

(30) Priorité: 02.07.1999 FR 9908606
(43) Date de publication de la demande: 03.01.2001
(73) Titulaire: Institut Français du Pétrole, 92852 Rueil-Malmaison Cedex (FR)
(72) Inventeur: Lenormand, Roland, 92500 Rueil Malmaison (FR); Chaput, Christophe, 87000 Limoges (FR)

(56) Documents cités:
- EP-A- 0 101 580
- EP-A- 0 470 483
- EP-A- 0 926 474
- GB-A- 1 176 914
- US-A- 5 315 872

## Description

La présente invention concerne une sonde capacitive de mesure du niveau d'un liquide conducteur de l'électricité dans un récipient, adaptée particulièrement à des applications à haute pression et haute température, et un procédé de fabrication d'une telle sonde.

Parmi les méthodes connues pour mesurer l'évolution du niveau d'un liquide dans un récipient, on peut citer les méthodes optiques suivant lesquelles on suit par asservissement un flotteur au travers d'une fenêtre transparente ménagée verticalement dans la paroi. Ce type de mesure ne convient que pour des liquides propres n'affectant pas la transparence de la fenêtre.

On peut citer également les méthodes ultrasoniques où l'on mesure la hauteur du liquide dans un récipient par le biais d'une mesure du temps de propagation d'impulsions se réfléchissant sur la surface. Ce type de mesure fonctionne bien même à des pressions et températures relativement élevées tant que l'interface entre l'interface des phases en présence est bien net mais il perd de sa précision quand le liquide est fortement émulsionné.

Il est aussi connu de détecter la position de l'interface entre un fluide conducteur de l'électricité au moyen d'une sonde capacitive dont la capacité électrique est affectée par la variation de niveau.

Une telle sonde comporte par exemple une tige métallique centrale gainée avec un matériau plastique isolant, plaqué par exemple par thermorétraction. Qui plonge plus ou moins dans le fluide conducteur. On mesure, la variation de la capacité inter-électrodes entre la tige gainée et le fluide conducteur résultant de la variation du niveau. Une sonde de ce type est utilisée par exemple dans le dispositif objet du brevet FR 2 772 477 du demandeur.

On connaît également des sondes capacitive de mesure de niveau formées par une première électrode constituée par la paroi métallique d'un récipient qui est séparée du liquide conducteur par une couche isolante réalisée par exemple en Teflon™. Il peut s'agir de la paroi d'un tube en matière plastique isolante chemisant intérieurement la paroi métallique du récipient ou bien encore un revêtement isolant (de l'émail par exemple) déposé bien uniformément sur sa face intérieure. La surface inter-électrodes est ici la surface de la paroi interne du tube 1. Une sonde de ce type est utilisée par exemple dans le dispositif décrit par le brevet FR 2 782 804 du demandeur.

Les sondes capacitives évoquées ci-dessus présentent certains inconvénients. Il est difficile tout d'abord de déposer une couche isolante uniforme et mince sur une tige ou une paroi métallique. Les sondes fonctionnent bien en général dans des conditions de température et de pression normales mais leur fonctionnement se dégrade très vite dans des environnements plus difficiles à cause notamment d'effets de fluage affectant les gaines plastiques. Cette dégradation intervient même lorsque les gaines ou revêtements isolants sont faits de matériaux résistant bien à la chaleur tels que des émaux. L'émail contient des bulles et les contraintes thermiques provoquent des microfissures que le liquide conducteur vient envahir. La constante diélectrique de la gaine ou du revêtement peut ainsi varier dans des proportions notables selon que la gaine est plus ou moins saturé avec le liquide, ce qui fausse bien évidemment les résultats de la mesure.

La sonde capacitive selon l'invention permet la mesure du niveau d'un fluide conducteur dans un récipient avec une bonne précision, les mesures étant stables au cours du temps et reproductibles, et donc d'éviter les inconvénients ci-dessus énoncés.

Elle comporte un élément tubulaire réalisé en un matériau électriquement isolant avec une première face au contact du fluide conducteur, constituant une première électrode et une face opposée en regard d'une deuxième électrode, et des moyens pour mesurer les variations de la capacité du condensateur formé par les électrodes, la deuxième électrode étant constituée en un alliage métallique fusible déposé sur la face opposée de l'élément tubulaire en matériau isolant, dont la température de fusion est choisie en fonction de la gamme de température limite spécifiée où la sonde capacitive est appelée à fonctionner.

Pour les applications dans une gamme de température jusqu'à 200°C par exemple, on peut choisir par exemple un alliage de type plomb/étain dont le point de fusion est de l'ordre de 300°C.

La deuxième électrode est coulée entre la face intérieure de l'élément tubulaire et une âme centrale.

En plaçant à l'intérieur de cette âme creuse en matériau réfractaire, une troisième électrode, on constitue deux condensateurs emboîtés l'un dans l'autre. Etant exposés à la même température, le condensateur intérieur peut servir alors de référence et permettre de compenser les effets de la température sur la permittivité diélectrique du matériau réfractaire et ainsi de compenser les variations concomitantes de la sonde capacitive.

Comme matériau réfractaire, on peut utiliser différents oxydes métalliques tels que de la zircone ou de l'alumine qui contrairement aux émaux, se révèlent pratiquement insensibles aux attaques chimiques et biologiques et stables vis-à-vis des variations de pression et de température.

On vérifie aisément que la sonde capacitive selon l'invention est bien appropriée pour fonctionner dans une large gamme de variation de température et de pression en raison de la stabilité de chaque couche isolante vis-à-vis de ces paramètres, ainsi que de sa parfaite résistance aux agents corrosifs divers, à la fois chimiques et biologiques.

Le procédé de fabrication de la sonde capacitive telle que définie ci-dessus comporte la fabrication de la couche isolante par cuisson d'un matériau réfractaire tel qu'un oxyde métallique (zircone, alumine ou autres) et la formation d'une électrode métallique obtenue par fusion d'un alliage fusible à une température intermédiaire entre la température de cuisson de la couche isolante et la température maximale prévue de fonctionnement de la sonde capacitive.

D'autres caractéristiques et avantages de la sonde selon l'invention, apparaîtront à la lecture de la description ci-après:
- la Fig.1 représente schématiquement en coupe longitudinale une tige centrale formant condensateur avec le fluide conducteur dont on veut mesurer le niveau ;
- la Fig.2 montre une coupe transversale, fortement agrandie pour la clarté de la description, de la Fig.1 ; cet example n'est pas un mode de réalisation de la présente invention.
- la Fig.3 montre en coupe transversale, également agrandie, le mode de réalisation de la présente invention;
- la Fig.4 montre schématiquement en coupe longitudinale, un deuxième example comportant un ensemble tubulaire formant condensateur avec le fluide conducteur dont on veut mesurer le niveau, qui se trouve à l'intérieur ; ce deuxième example n'est pas un mode de réalisation de la présente invention
- la Fig.5 montre, une coupe transversale également agrandie de la Fig.4.

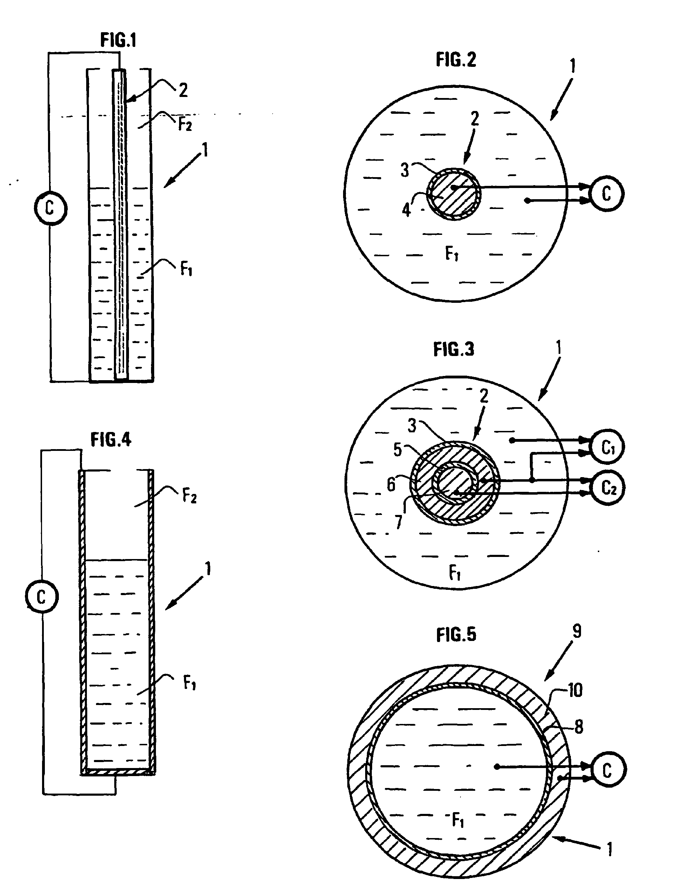

La sonde capacitive selon l'invention (Fig. 1 et 3) est adaptée à mesurer la hauteur de l'interface entre un fluide conducteur de l'électricité F1 (de la saumure par exemple) et un autre fluide F2 non conducteur, (un gaz ou un liquide tel que de l'huile), contenus dans un récipient allongé 1 (Fig.1), par détermination de la capacité du condensateur constitué par le fluide conducteur F1 (première électrode) et une tige centrale 2.

Cette tige 2 comporte (Fig.2) un tube 3 réalisé en un matériau diélectrique réfractaire. Ce tube ayant été formé par moulage ou extrusion, est cuit à une température élevée (1000 à 2000°C par exemple). La deuxième électrode 4 est formée à l'intérieur du tube isolant 3. Elle est réalisée de préférence par remplissage de l'intérieur du tube 3 avec un alliage métallique fusible choisi de façon que sa température de fusion soit naturellement bien au-dessus de la température maximale de fonctionnement spécifiée pour la sonde capacitive, tout en restant largement au-dessous de la température de cuisson du matériau réfractaire. On utilise par exemple un alliage à base de métaux tels que du zinc, de l'étain, du cuivre etc., que l'on trouve avec leurs spécifications précises dans les catalogues de métallurgistes. La deuxième électrode 4 dans la tige 2 et la paroi conductrice du récipient (en contact électrique avec le fluide conducteur F1) sont connectées respectivement aux bornes d'un capacimètre C. La capacité mesurée est directement proportionnelle à la hauteur de liquide conducteur dans le récipient.

Comme matériau réfractaire, on utilise avantageusement un oxyde métallique tel que la zircone ou bien encore l'alumine. La zircone présente notamment l'avantage d'être insensible à la fois aux attaques chimiques et biologiques. Contrairement aux émaux utilisés couramment, la zircone présente un coefficient de dilatation thermique proche de celui des métaux, ce qui permet à la tige centrale 2 de conserver une très bonne cohésion quelle que soit la température de fonctionnement.

A titre d'exemple, on peut utiliser un tube formé en zircone ayant 1cm de diamètre et une paroi de 0,5 mm d'épaisseur, et une longueur de 30 cm par exemple, dont la capacité est de l'ordre de 1nF facilement mesurable.

Pour améliorer la cohésion de la tige centrale 2, s'il se trouve que le coefficient de dilatation thermique de l'électrode 4 en alliage est différent de celui du tube de céramique 3, on peut remplacer une partie du volume de l'alliage par une âme en inox ou en Invar ™ par exemple (non représentée) dont on choisit le diamètre de façon à mieux ajuster le coefficient de dilatation de l'ensemble.

Suivant le mode de réalisation de l'invention, Fig.3, la tige centrale 2 comporte deux tubes 3, 5 coaxiaux en matériau réfractaire. L'espace annulaire entre les deux tubes est rempli d'un alliage conducteur 6 qui constitue la deuxième électrode. Le tube intérieur 5 est rempli d'un alliage conducteur 7 qui constitue une troisième électrode. On veille à bien l'isoler électriquement de la deuxième électrode 6. On forme ainsi deux condensateurs. Le premier, constitué par la paroi conductrice 1 du récipient (en contact électrique avec le fluide conducteur F1) le tube isolant 3 et la deuxième électrode 6, est connecté à un premier capacimètre C1. Le deuxième, constitué par la deuxième électrode 6, le tube isolant intérieur 5 et la troisième électrode 7 en alliage, est connecté à un premier capacimètre C2.

Le deuxième condensateur central (5-7) est soumis à la même température que le premier. On peut utiliser de ce fait les variations de la permittivité électrique de son diélectrique 5 pour compenser les variations concomitantes du premier condensateur sous l'effet de la température, par combinaison des mesures faites par les deux capacimètres C1, C2. Cette structure coaxiale combinée peut permettre aussi d'adapter plus facilement le coefficient de dilatation pour garder à la tige centrale une bonne cohésion sous l'effet des variations de température, en jouant par exemple sur le choix des alliages constituant la deuxième et la troisième électrode.

Suivant les Fig.4, 5, les fluides sont à l'intérieur d'un tube en matériau réfractaire 8 et isolés par lui d'une deuxième électrode extérieure 9 constituée soit directement par la paroi extérieure de l'enceinte 1 ou de préférence comme précédemment par un volume annulaire 10 en alliage fusible coulé entre elle et le tube 8. De la même manière, le liquide conducteur F1 à l'intérieur du tube isolant 8 d'une part et l'électrode extérieure d'autre part, sont connectés électriquement à un capacimètre C.

On a décrit un mode de réalisation où la deuxième électrode 6 était réalisée avantageusement par dépôt d'un métal fusible. On ne sortirait pas du cadre de l'invention toutefois en utilisant comme électrode un tube de diamètre choisi pour être une fois mise en place, en contact étroit avec la ou chaque couche réfractaire isolante (3,5).

## Revendications

1. Sonde capacitive de mesure du niveau dans un récipient (1), d'un fluide (F1) conducteur de l'électricité, comportant un premier condensateur de mesure du niveau du fluide (F1) et un second condensateur de compensation, et des moyens (C1, C2) pour mesurer des variations de capacité desdits condensateurs, caractérisé en que le premier condensateur comporte :- une première électrode formée par le fluide (F1), - un diélectrique formé par un premier élément tubulaire (3) réalisé en un matériau électriquement isolant avec une première face au contact du fluide conducteur (F1), - une deuxième électrode (6) au regard d'une face opposée dudit premier élément tubulaire (3), ladite deuxième électrode (6) étant constituée en un alliage métallique fusible, et ledit alliage ayant une température de fusion choisie au dessus d'une gamme de température limite à laquelle la sonde capacitive est appelée à fonctionner, et en ce que le second condensateur comporte : - la dite seconde électrode (6), - un diélectrique formé par un deuxième élément tubulaire (5) en matériau isolant, positionné de façon à ce que la seconde électrode (6) soit disposée entre une face intérieure dudit premier élément tubulaire (3) et le deuxième élément tubulaire (5), et - une troisième électrode (7) à l'intérieur dudit deuxième élément tubulaire (5).

2. Sonde capacitive selon la revendication 1, dans laquelle la troisième électrode (7) est constituée d'un alliage fusible dont la température de fusion est choisie au dessus d'une gamme de température limite à laquelle la sonde capacitive est appelée à fonctionner.

3. Sonde capacitive selon l'une des revendications précédentes, dans laquelle chaque élément tubulaire (3, 5) est réalisé en matériau réfractaire.

4. Sonde capacitive selon la revendication 3, dans laquelle chaque élément tubulaire (3, 5) est réalisé à base d'oxydes métalliques tels que de la zircone ou l'alumine.

## Claims

1. A capacitive probe for measuring the level, in a vessel (1), of an electrically conductive fluid (F1), comprising a first capacitor for measuring the level of fluid (F1) and a second compensation capacitor, and means (C1, C2) for measuring capacitance variations of said capacitors, **characterized in that** the first capacitor comprises: - a first electrode consisting of conductive fluid (F1), - a dielectric consisting of a first tubular element (3) made of an electrically insulating material with a first face in contact with conductive fluid (F1), - a second electrode (6) facing an opposite face of said first tubular element (3), said second electrode (6) being made of a fusible metal alloy, and said alloy having a melting temperature selected above a limit temperature range within which the capacitive probe is intended to operate, and **in that** the second capacitor comprises: - said second electrode (6), - a dielectric consisting of a second tubular element (5) made of an insulating material, so positioned that second electrode (6) is arranged between an inner face of said first tubular element (3) and second tubular element (5), and - a third electrode (7) within said second tubular element (5).

2. A capacitive probe as claimed in claim 1, wherein third electrode (7) is made of a fusible alloy whose melting temperature is selected above a limit temperature range within which the capacitive probe is intended to operate.

3. A capacitive probe as claimed in any one of the previous claims, wherein each tubular element (3, 5) is made of a refractory material.

4. A capacitive probe as claimed in claim 3, wherein each tubular element (3, 5) is based on metal oxides such as zirconia or alumina.

## Patentansprüche

1. Kapazitive Sonde zum Messen des Füllstands, in einem Behälter (1), eines elektrisch leitenden Fluids (F1), welche einen ersten Kondensator zum Messen des Füllstands des Fluids (F1) umfasst, und einen zweiten Kondensator zur Kompensation, und Mittel (C1, C2), zum Messen von Kapazitätsänderungen der Kondensatoren, **dadurch gekennzeichnet, dass** der erste Kondensator umfasst: - eine erste Elektrode, welche durch das Fluid (F1) gebildet ist, - ein Dielektrikum, welches durch ein erstes rohrförmiges Element (3) gebildet ist, das aus einem elektrisch isolierenden Material hergestellt ist, mit einer ersten Fläche in Kontakt mit dem leitenden Fluid (F1), - eine zweite Elektrode (6), gegenüberliegend der anderen Fläche des ersten rohrförmigen Elements (3), wobei die zweite Elektrode (6) aus einer schmelzbaren Metalllegierung besteht, und wobei die Legierung eine Schmelztemperatur aufweist, welche oberhalb einer Grenze eines Temperaturbereichs gewählt ist, in dem die kapazitive Sonde arbeiten soll, und dadurch, dass der zweite Kondensator umfasst: - die zweite Elektrode (6), - ein Dielektrikum, welches durch ein zweites rohrförmiges Element (5) aus isolierendem Material gebildet ist, das derart positioniert ist, dass die zweite Elektrode (6) zwischen einer inneren Fläche des ersten rohrförmigen Elements (3) und dem zweiten rohrförmigen Element (5) angeordnet ist, und - eine dritte Elektrode (7), im Inneren des zweiten rohrförmigen Elements (5).

2. Kapazitive Sonde nach Anspruch 1, wobei die dritte Elektrode (7) aus einer schmelzbaren Legierung besteht, deren Schmelztemperatur oberhalb einer Grenze eines Temperaturbereichs gewählt ist, in dem die kapazitive Sonde arbeiten soll.

3. Kapazitive Sonde nach einem der vorhergehenden Ansprüche, wobei jedes rohrförmige Element (3, 5) aus Refraktärmaterial hergestellt ist.

4. Kapazitive Sonde nach Anspruch 3, wobei jedes rohrförmige Element (3, 5) auf Basis von Metalloxiden hergestellt ist, wie etwa Zirconiumdioxid oder Aluminiumoxid.
